**Europäisches Patentamt**

**European Patent Office**

**Office européen des brevets**

(11) Veröffentlichungsnummer: **0 052 212**
**B1**

(12) # EUROPÄISCHE PATENTSCHRIFT

(45) Veröffentlichungstag der Patentschrift:
**02.05.85**

(21) Anmeldenummer: **81107885.6**

(22) Anmeldetag: **03.10.81**

(51) Int. Cl.⁴: **C 08 G 12/38, C 08 L 61/30, C 09 J 3/16, C 08 L 97/02**

(54) **Verfahren zur Herstellung von Aminoplastkondensaten.**

(30) Priorität: **13.11.80 DE 3042813**

(43) Veröffentlichungstag der Anmeldung:
**26.05.82 Patentblatt 82/21**

(45) Bekanntmachung des Hinweises auf die Patenterteilung:
**02.05.85 Patentblatt 85/18**

(84) Benannte Vertragsstaaten:
**AT DE FR IT NL SE**

(56) Entgegenhaltungen:
**EP - A - 0 025 245**
**FR - A - 974 513**
**FR - A - 1 319 269**
**FR - A - 2 270 094**
**FR - A - 2 270 096**
**FR - A - 2 350 196**
**GB - A - 979 757**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Etling, Hans, Dr., Pommernstrasse 12, D-6701 Dannstadt-Schauernheim (DE)**
Erfinder: **Dudeck, Christian, Dr., Odenwaldring 20, D-6703 Limburgerhof (DE)**
Erfinder: **Diem, Hans, Dr., Feldbergstrasse 63, D-6800 Mannheim (DE)**
Erfinder: **Siegler, Manfred, Carl-Bosch-Ring 24, D-6710 Frankenthal (DE)**

## Beschreibung

Die Erfindung bezieht sich auf ein Verfahren zur Herstellung von wässrigen Aminoplastkondensaten, die vorzugsweise als Leimharze (Holzleime) verwendbar sind, und die Melamin und Harnstoff als Aminoplastbildner enthalten und sowohl eine geringe Neigung zur Abspaltung von Formaldehyd, d.h. geringen Formaldehydgeruch als auch eine hohe Wasserfestigkeit aufweisen.

Leimharze, die sowohl wasserfeste als auch formaldehydgeruchsarme Verleimungen ergeben, können bisher nur auf der Grundlage von Phenol, also in Form phenoplastischer Leime hergestellt werden, die jedoch andere spezifische technische Nachteile aufweisen und auch teurer sind als Aminoplast-Leime.

Aus der FR-A-2 270 096 sind Kondensate auf Basis von Harnstoff-Melamin-Formaldehyd bekannt, die einen sehr hohen Formaldehydanteil aufweisen. Diese Produkte sollen als Tränkharze zur Anwendung kommen.

Nach dem Vorschlag der FR-A-1 319 269 können geruchsarme Melamin-Harnstoff-Formaldehyd-Kondensate erhalten werden, wenn man den anfänglich sehr hohen Formaldehydanteil mittels wässriger Ammoniaklösung erniedrigt. Die Ammoniakzugabe beeinträchtigt aber die Qualität der Leimharze und der daraus resultierenden Werkstoffe in entscheidendem Masse. Zudem ist bei der Herstellung dieser Harze ein grosser Apparate- und Energieaufwand notwendig.

Die bisher bekannten Aminoplastharze für wasserfeste und insbesondere kochfeste Verleimungen, d.h. zur Herstellung wasser- bzw. wetterfester Spanholzwerkstoffe, wie sie z.B. in der DE-PS 2 020 481 beschrieben sind, weisen eine besonders hohe Neigung zur Abspaltung von Formaldehyd auf und bestehen gewöhnlich aus Mischkondensaten von Harnstoff, Melamin und evtl. Phenol mit Formaldehyd.

Der Grund für die Neigung zur Formaldehydabspaltung ist vermutlich der hohe Gehalt an Formaldehyd. Ausgedrückt durch das übliche Mass des Molverhältnisses beträgt dieser Gehalt i.a. 1.6 mol und mehr je mol Aminoplastbildner. Der Gehalt an Formaldehyd lässt sich jedoch – jedenfalls bei Mischkondensaten, die keine reinen Harnstoffharze darstellen – nicht einfach durch Änderung des Molverhältnisses verringern, da auf diese Weise nur Harze mit geringer oder sogar verschwindender Lagerfähigkeit entstehen oder überhaupt keine Harze im üblichen Sinne erhalten werden.

Es wurde nun gefunden, dass die Herstellung von wässrigen Lösungen von Aminoplastkondensaten, die als Holzleime verwendbar sind und die als Aminoplastbildner Melamin und Harnstoff enthalten, wobei ein Molverhältnis der Aminoplastbildner zum Formaldehyd unter 1,5 vorgesehen ist und wobei der Anteil an Kondensaten, die dem Melamin zuzurechnen sind, mindestens 30 Gew.% beträgt, vorteilhaft gelingt, wenn man Harnstoff und Melamin jeweils für sich mit Formaldehyd kondensiert und wenigstens für das Melamin-Formaldehyd-Kondensat die Konzentration der Ausgangsstoffe derart wählt, dass sich ein Molverhältnis von F:M von unter 1,5 und ein Kondensatgehalt von zunächst unter 60 Gew.% in der Lösung ergibt und die Kondensate gegebenenfalls nach Einengen vereinigt.

Die Erkenntnis, dass die getrennte Herstellung von Lösungen von Harnstoff- und Melaminharzen mit niedrigem Molverhältnis und deren Mischung im Prinzip zu den gewünschten wasserfesten und formaldehydarmen Harzen führt, ist deshalb überraschend, weil wasserfeste Harze mit hohem Formaldehyd-Anteil nicht durch Mischung ihrer Einzelkomponenten, sondern nur durch genaue Einhaltung eines speziellen Kondensationsweges und entsprechender Bedingungen zu erhalten waren, wie z.B. in der vorerwähnten DE-PS 2 020 481 auch angegeben ist.

Massgebend für die erfolgreiche Herstellung von Melaminkondensaten mit einem Formaldehydanteil von 1,5 und weniger ist allerdings eine verhältnismässig verdünnte Lösung der Kondensationsteilnehmer; 55 Gew.% berechneter Kondensatgehalt bzw. eine entsprechende Konzentration von Melamin und Formaldehyd können nicht überschritten werden, und vielfach ist es günstig, einen Gehalt von 50 Gew.% oder weniger vorzusehen, wobei mit abnehmendem Molverhältnis auch die höchstmögliche Konzentration abnimmt. Die untere Grenze der Konzentration wird nicht durch technische, sondern nur durch wirtschaftliche Überlegungen bestimmt.

Das Molverhältnis sollte so niedrig wie möglich, zweckmässig 1,1 bis 1,4 sein.

Die Herstellung eines Melaminharzes mit einem Molverhältnis von 1,5 oder weniger folgt im übrigen den Regeln der Herstellung von Melaminharzen: Die Kondensation geschieht im schwach bis mässig alkalischen Bereich mit einem besonders günstigen Verlauf bei pH 8,5 bis 9,5. Man unterbricht die Reaktion, die mit wässriger Alkalilauge oder einem technisch üblichen Amin gesteuert wird, wenn eine Wasserverdünnbarkeit von 1:1,5 bei 20°C oder weniger erreicht ist, in üblicher Weise durch Abkühlen und Einstellen eines pH-Wertes von 9,5 bis 10.

Mit abnehmendem Molverhältnis wird es schwieriger, das Melamin in Lösung zu bringen; es kann sich daher als zweckmässig erweisen, in einem druckfesten Gefäss zu kondensieren und die Reaktionstemperatur auf z.B. 110 bis 140°C zu steigern, wenn die Herstellung eines von vorneherein konzentrierteren Harzes vorgesehen ist, wobei natürlich die Reaktionsdauer entsprechend abnimmt.

Die Ausgangsstoffe werden zweckmässig in einer solchen Menge eingesetzt, dass das resultierende Harz eine Konzentration von z.B. 40 bis 55 Gew.% in der wässrigen Lösung aufweist. Es ist zweckmässig, bei grösserer Verdünnung zu kondensieren und nachher entsprechend einzuengen, besonders wenn die Harzlösung zur Ersparnis von Transportkosten oder zur Vermeidung einer zu hohen Feuchte im Spanmaterial auf eine höhere Konzentration gebracht werden muss.

Die Bereitstellung eines formaldehydarmen Harnstoffharzes ist weniger problematisch; man kann ein Harz im Molverhältnis von z.B. 1,1 bis 1,5 üblicher Konzentration (z.B. 45 bis 75%) unmittelbar herstellen oder ein übliches Harz mit höherem Formaldehyd-Anteil verwenden, das vor oder auch nach dem Mischen der beiden Kondensate durch Zusatz von Harnstoff auf entsprechend niedrigeres Molverhältnis gebracht wird, wie das für reine Harnstoffharze bekannt und auch üblich ist. Zweckmässig soll das Harnstoffharz ein Molverhältnis von weniger als 1,5, insbesondere von 1,35 oder weniger aufweisen.

Es ist vorteilhaft, wenn man die Lösung des Melamin-Kondensats und/oder ihrer Mischung mit der des Harnstoff-Kondensats durch Eindampfen unter vorzugsweise vermindertem Druck auf einen Kondensatgehalt von wenigstens 60 Gew.% bringt.

Das durch Mischen der Kondensatlösung herzustellende Verhältnis von Melamin und Harnstoff kann in gewissen Grenzen schwanken, je nach dem Grad der gewünschten Wasserbeständigkeit, wobei aber auch wirtschaftliche Überlegungen anzustellen sind. Technisch gesehen, ist es jedenfalls möglich, beliebige Mischungen herzustellen; wegen der Wasserbeständigkeit sind i.a. wenigstens 10 Gew.% Melamin (bzw. höchstens 40% Harnstoff) und aus wirtschaftlicher Sicht i.a. nicht mehr als 25 Gew.% Melamin (bzw. mindestens 25% Harnstoff) bezogen auf eine 65%ige Harzlösung vorzusehen.

Das vorstehende Verhältnis kann auch durch den Anteil der jeweiligen Kondensate ausgedrückt werden; danach soll der dem Melamin zuzuordnende Kondensat-(Harz-)anteil mindestens 30 Gewichtsprozent, bezogen auf den Feststoffgehalt der Lösung und zweckmässig 40 bis 60 Gewichtsprozent betragen. Ein höherer Melaminanteil ist möglich, aber i.a. ohne technischen Vorteil.

Der technische Ablauf der Kondensation der einzelnen Lösungen, ihre Vereinigung und alle sonstigen mit der Herstellung der Harze zusammenhängenden Operationen sind dem Fachmann weitgehend geläufig, so dass ihre Erwähnung in einem der nachfolgenden Beispiele ohne weiteres verallgemeinert werden kann.

Herstellbeispiel 1 für ein Melaminharz

Eine Suspension von 126 kg Melamin, 67,5 kg 40%iger wässriger Formaldehydlösung und 81,5 kg Wasser wurde durch Zusatz von Natronlauge auf einen pH-Wert von 8,5 bis 9 eingestellt und bis zum Sieden erhitzt. Der pH-Wert wurde durch Zufügen wässriger Natronlauge eingehalten und das Reaktionsgemisch so lange gerührt, bis alles Melamin gelöst, und aus einer Probe bei 20°C durch Zusetzen der 1½fachen Menge Wasser Harz ausgefällt werden konnte. Danach wurden unter vermindertem Druck und Nachheizen ca. 12 kg Wasser abgezogen, das Reaktionsprodukt abgekühlt und durch Hinzufügen weiterer Natronlauge auf einen pH-Wert von 10 eingestellt. Man erhielt eine 65%ige Lösung eines Melamin-Formaldehyd-Kondensats mit einem Molverhältnis von 1,5, das zur Abmischung mit einem Harnstoffharz geeignet war.

Herstellbeispiel 2 für ein Melaminharz

In einer druckfesten Rührapparatur wurde eine Suspension von 126 kg Melamin, 58,5 kg 40%iger wässriger Formaldehydlösung und 115,5 kg Wasser mit Dimethylethanolamin auf einen pH-Wert von 9,0 gebracht. Danach wurde die Lösung auf 130 bis 140°C erhitzt, gerührt, bis alles Melamin gelöst war und aus einer Probe durch Zusetzen der 1- bis 2fachen Menge Wasser Harz ausgefällt werden konnte. Nachdem die Lösung rasch auf eine Temperatur von unter 100°C abgekühlt war, wurde durch Verdampfen 46 kg Wasser entzogen. Nach Abkühlen wurde auf einen pH-Wert von ca. 9,5 eingestellt. Man erhielt eine 65%ige Melamin-Formaldehyd-Harz-Lösung mit einem Molverhältnis von Formaldehyd:Melamin wie 1,3:1, die zur weiteren Abmischung mit einem Harnstoff-Formaldehyd-Harz geeignet war.

Herstellbeispiel 1 für ein Harnstoffharz

189 kg 40%ige wässrige Formaldehydlösung, 60 kg Harnstoff und 56 kg Wasser wurden durch Zusatz von Alkali auf pH 7 bis 7,5 eingestellt, ca. 95°C erhitzt und bei dieser Temperatur 10 Minuten lang gerührt. Durch fortlaufende Zugabe von Alkalilösung wurde ein pH-Wert von 7 bis 7,5 aufrechterhalten. Danach wurde mit Ameisensäure das Reaktionsgemisch auf pH 4,5 bis 5 gebracht und bei 95 bis 98°C so lange gerührt, bis eine Probe nach Zusatz der 5fachen Menge Wasser sich bei 5 bis 15°C trübte. Die Reaktion wurde durch Zufügen von Natronlauge und Einstellen eines pH-Wertes von 8–8,5 sowie rasches Abkühlen unterbrochen. Bei etwa 70°C wurden weitere 74 kg Harnstoff zugesetzt und nach Abkühlen wurde ein pH-Wert von 8,5–9 (bei 20°C) eingestellt. Man erhielt ein Harnstoff-Harz mit einem Molverhältnis von 1,3 und einem Trockengehalt (2 h/120°C) von ca. 65% das zur Abmischung mit einem Melaminharz geeignet war.

Herstellbeispiel 2 für ein Harnstoffharz

1 kg eines wässrigen Vorkondensationsproduktes, das 485 g Formaldehyd im Molverhältnis 4:1 an Harnstoff gebunden enthält, wurde mit 323 g Harnstoff-Lösung (68%ig, 70°C heiss) und 131 g Methanol gemischt, mit 25%iger Natronlauge auf einen pH-Wert von 7,3 eingestellt und unter Rühren auf 90°C erhitzt. Man hielt das Reaktionsgemisch 10 Minuten bei dieser Temperatur, wobei der pH-Wert sank. Anschliessend wurde mit 20%iger Ameisensäure ein pH-Wert von 4,5 eingestellt und bei 90 bis 98°C bis zu einem Trübungspunkt von 25°C (1 Teil Reaktionsgemisch verdünnt mit 5 Teilen heissem Wasser) kondensiert. Die Kondensation verlief in etwa 50 Minuten. Nach Erreichen des Trübungspunktes wurde neutralisiert und auf 50°C abgekühlt, 180 g Wasser abdestilliert und dem Reaktionsgemisch 425 g fester Harnstoff zugefügt. Nachdem ein pH-Wert von 8,9 eingestellt war, wurde rasch auf unter 20°C gekühlt. Die erhaltene Harzlösung hatte folgende Eigenschaften:

| Viskosität: | 667 mPas (20°C) |
| pH-Wert: | 8,9 |
| Lagerstabilität bei 20°C: | mind. 4 Monate |
| Gelierzeit bei 50°C (nach Zusatz von 10% einer 15%igen $NH_4$ Cl-Lösung): | 93 min |
| Dichte 20°C: | 1,271 g/cm³ |

Beispiel 1

100 kg der Lösung aus dem Beispiel 1 und 120 kg Lösung aus dem Herstellbeispiel 2 wurden bei Raumtemperatur vermischt. Man erhielt eine ca. 65%ige Lösung.

Beispiel 2

100 kg der Lösung des Herstellbeispiels 2 und 90 kg der Lösung des Herstellbeispiels 4 wurden bei Raumtemperatur vermischt. Man erhielt eine ca. 65%ige Lösung.

Beispiel 3

100 kg der Lösung des Herstellbeispiels 1, 105 kg handelsüblicher Harnstoff-Formaldehyd-Leim ca. 66%iger Lösung, dessen Molverhältnis 1,6 beträgt und 3 kg Wasser wurden vermischt. In der Mischung wurden – ggf. unter leichtem Erwärmen – weitere 12 kg Harnstoff gelöst. Man erhielt 220 kg einer ca. 65%igen Lösung.

Vergleichsversuch 1

Zum Vergleich wurde ein übliches Melamin-Formaldehyd-Harz im Molverhältnis 1,65 hergestellt und auf eine Konzentration von ca. 65% gebracht. Zu 100 kg dieses Produkts gab man 100 kg handelsüblichen Harnstoff-Formaldehyd-Leim ca. 66%iger Lösung, dessen Molverhältnis 1,6 betrug. Man erhielt 200 kg ca. 65%iger Lösung.

Vergleichsversuch 2

Das Harnstoffharz des Herstellbeispiels 2 wurde für sich verwendet, wie nachstehend beschrieben ist.

Anwendungstechnische Prüfung

Je 1000 g Harzlösung der Beispiele 1, 2 und 3 sowie der Vergleichsversuche wurden in üblicher Weise mit 70 g Wasser, 65 g 50%iger Paraffinemulsion und 90 g handelsüblicher Härterlösung zu einer Leimharzflotte angesetzt. Damit wurden Standard-Fichtenholzspäne so beleimt, dass sich ein Harzgehalt (trocken/trocken) von 12% ergab und eine Feuchte von 11,5 bis 12%. Bei 165°C und 270 Sekunden Presszeit wurden 18 mm starke Spanplatten hergestellt.

Es wurde die Wasserfestigkeit nach DIN 68763 (V 100) und die Formaldehydabspaltung nach der FESYP-Perforatormethode bestimmt.

Die Prüfung hatte folgendes Ergebnis:

| Eigenschaft | Prüfkörper gemäss Beispiel | | | Vergleich | |
| | 1 | 2 | 3 | 1 | 2 |
| --- | --- | --- | --- | --- | --- |
| Scherfestigkeit, V 100 N/mm² | 1,3 | 1,3 | 1,3 | 1,3 | Z* |
| Formaldehydabgabe nach FESYP, mg HCHO/100 g atro Platte | ca. 14 | ca. 8 | ca. 15 | ca. 90 | ca. 8 |

* völlige Zerstörung des Prüfkörpers beim Kochen

## Patentansprüche

1. Verfahren zur Herstellung von wässrigen Lösungen von Aminoplastkondensaten, die als Holzleime verwendbar sind und die als Aminoplastbildner Melamin und Harnstoff enthalten, wobei ein Molverhältnis der Aminoplastbildner zum Formaldehyd unter 1,5 vorgesehen ist und wobei der Anteil an Kondensaten, die dem Melamin zuzurechnen sind, mindestens 30 Gewichtsprozent beträgt, dadurch gekennzeichnet, dass man Harnstoff und Melamin jeweils für sich mit Formaldehyd kondensiert und wenigstens für das Melamin-Formaldehyd-Kondensat die Konzentration der Ausgangsstoffe derart wählt, dass sich ein Molverhältnis von F:M von unter 1,5 und ein Kondensatgehalt von zunächst unter 60 Gew.% in der Lösung ergibt und die Kondensate gegebenenfalls nach Einengen vereinigt.

2. Verfahren nach Anspruch 1, dadurch gekennzeichnet, dass das Harnstoff-Formaldehyd-kondensat vor seiner Vereinigung mit dem Melamin-Formaldehyd-Kondensat ein Molverhältnis von weniger als 1,5 aufweist.

3. Verfahren nach Anspruch 1, dadurch gekennzeichnet, dass ein Harnstoff-Formaldehyd-Kondensat mit beliebigem Molverhältnis gewählt und der Harnstoffgehalt der vereinigten Kondensatlösungen auf ein anteiliges Molverhältnis von 1,5 oder weniger durch Harnstoffzusatz eingestellt wird.

4. Verfahren nach Anspruch 1, dadurch gekennzeichnet, dass man die Lösung des Melamin-Kondensats und/oder ihre Mischung mit der des Harnstoff-Kondensats durch Eindampfen unter vorzugsweise vermindertem Druck auf einen Kondensatgehalt von wenigstens 60 Gew.% bringt.

5. Verfahren nach Anspruch 1, dadurch gekennzeichnet, dass der Anteil an Kondensaten, die dem Melamin zuzurechnen sind, 40 bis 60 Gewichtsprozent beträgt.

6. Verwendung der Lösung gemäss einer der Ansprüche 1 bis 5 zur Verleimung von Holz oder Holzbestandteilen.

## Claims

1. A process for the preparation of aqueous solutions of aminoplast condensates, which can be used as wood glues and contain melamine and urea as aminoplast-forming compounds, the molar ratio of aminoplast-forming compounds to formaldehyde being less than 1.5, and the proportion of condensates containing melamine being at least 30% by weight, wherein urea and melamine are condensed separately with formaldehyde, and at least for the melamine-formaldehyde condensate the concentration of the starting materials is so chosen that a molar ratio of formaldehyde to melamine of less than 1.5 results and that the solution initially contains less than 60% by weight of condensate, and the condensates are combined after optional concentration.

2. A process as claimed in claim 1, wherein the urea-formaldehyde condensate has a molar ratio of less than 1.5 before it is combined with the melamine-formaldehyde condensate.

3. A process as claimed in claim 1, wherein a urea-formaldehyde condensate having any molar ratio is chosen, and the urea content of the combined condensate solutions is brought to a molar ratio of 1.5 or less, calculated on the basis of urea alone, by the addition of urea.

4. A process as claimed in claim 1, wherein the solution of the melamine condensate and/or the mixture thereof with the solution of the urea condensate is brought to a condensate content of at least 60% by weight by evaporation under preferably reduced pressure.

5. A process as claimed in claim 1, wherein the proportion of condensates containing melamine is 40 to 60% by weight.

6. The use of a solution prepared as claimed in any of claims 1 to 5 for gluing wood or wood components.

## Revendications

1. Procédé pour la préparation de solutions aqueuses de produits de condensation aminoplastes qui sont utilisables comme colles à bois et qui contiennent, en tant que générateurs d'aminoplaste, de la mélamine et de l'urée, un rapport molaire des générateurs d'aminoplaste au formaldéhyde de moins de 1,5 étant prévu et la part des produits de condensations qui sont attribuables à la mélamine étant d'au moins 30% en poids, caractérisé en ce qu'on condense individuellement l'urée et la mélamine avec le formaldéhyde en choisissant, au moins pour le produit de condensation de mélamine-formaldéhyde, la concentration des substances de départ de telle manière qu'il en résulte un rapport molaire F:M de moins de 1,5 et une teneur en produit de condensation qui est tout d'abord de moins de 60% en poids dans la solution, et on réunit les produits de condensation, le cas échéant après concentration.

2. Procédé selon la revendication 1, caractérisé en ce que le produit de condensation d'urée-formaldéhyde présente, avant sa réunion avec le produit de condensation de mélamine-formaldéhyde, un rapport molaire de moins de 1,5.

3. Procédé selon la revendication 1, caractérisé en ce qu'on choisit un produit de condensation d'urée-formaldéhyde de n'importe quel rapport molaire et on règle la teneur en urée des solutions de produits de condensation réunies à un rapport molaire commun de 1,5 ou moins, par addition d'urée.

4. Procédé selon la revendication 1, caractérisé en ce qu'on amène à une teneur en produit de condensation d'au moins 60% en poids la solution du produit de condensation de mélamine et/ou son mélange avec le produit de condensation d'urée, par évaporation, de préférence sous pression réduite.

5. Procédé selon la revendication 1, caractérisé en ce que la proportion de produits de condensation qui sont attribuables à la mélamine s'élève à une valeur comprise entre 40 et 60% en poids.

6. Utilisation des solutions selon l'une quelconque des revendications 1 à 5 pour le collage de bois ou d'éléments de bois.